(19)

Europäisches
Patentamt
European
Patent Office
Office européen
des brevets

(11)  **EP 1 250 784 B1**

(12)  **EUROPÄISCHE PATENTSCHRIFT**

(45) Veröffentlichungstag und Bekanntmachung des
Hinweises auf die Patenterteilung:
**15.08.2007  Patentblatt 2007/33**

(21) Anmeldenummer: **00985085.0**

(22) Anmeldetag: **23.11.2000**

(51) Int Cl.:
*H04L 27/26* (2006.01)      *H04M 11/06* (2006.01)

(86) Internationale Anmeldenummer:
**PCT/EP2000/011682**

(87) Internationale Veröffentlichungsnummer:
**WO 2001/041388 (07.06.2001 Gazette 2001/23)**

(54) **VERFAHREN ZUR ÜBERTRAGUNG VON SENDEDATEN DURCH EIN TEILNEHMERMODEM**

METHOD FOR TRANSMITTING DATA TO BE TRANSMITTED USING A SUBSCRIBER MODEM

PROCEDE DE TRANSMISSION DE DONNEES D'EMISSION PAR L'INTERMEDIAIRE D'UN MODEM
D'ABONNE

(84) Benannte Vertragsstaaten:
**DE FR GB**

(30) Priorität: **02.12.1999  US 168570 P**
**07.08.2000  DE 10038375**

(43) Veröffentlichungstag der Anmeldung:
**23.10.2002  Patentblatt 2002/43**

(60) Teilanmeldung:
**07105843.2 / 1 802 067**

(73) Patentinhaber: **Infineon Technologies AG**
**81669 München (DE)**

(72) Erfinder: **STARNBERGER, Klaus**
**A-9500 Villach (AT)**

(74) Vertreter: **Charles, Glyndwr**
**Reinhard-Skuhra-Weise & Partner**
**Patentanwälte,**
**Friedrichstrasse 31**
**80801 München (DE)**

(56) Entgegenhaltungen:
**WO-A-98/59426         WO-A-99/33215**
**GB-A- 2 300 546**

Anmerkung: Innerhalb von neun Monaten nach der Bekanntmachung des Hinweises auf die Erteilung des europäischen
Patents  kann jedermann beim Europäischen Patentamt gegen das erteilte europäische Patent Einspruch einlegen.
Der Einspruch ist schriftlich einzureichen und zu begründen. Er gilt erst als eingelegt, wenn die Einspruchsgebühr
entrichtet worden ist. (Art. 99(1) Europäisches Patentübereinkommen).

Printed by Jouve, 75001 PARIS (FR)

**Beschreibung**

Die Erfindung betrifft ein Verfahren zur Übertragung von Sendedaten durch ein Teilnehmermodem eines Teilnehmeranschlußnetzes mit angepaßter Sendeleistung.

Teilnehmermodems dienen der Datenübertragung zwischen einem Teilnehmerendgerät, das an dem Teilnehmermodem anschließbar ist, und einer Vermittlungsstelle. Hierzu ist das Teilnehmermodem über eine Teilnehmeranschlußleitung an ein zugehöriges Vermittlungsmodem innerhalb der Vermittlungsstelle angeschlossen. Die verschiedenen Vermittlungsmodems innerhalb der Vermittlungsstelle sind an eine Schalteinrichtung, insbesondere eine Multiplexerschaltung, angeschlossen, um die verschiedenen Teilnehmeranschlußleitungen an eine breitbandige Datenübertragungsleitung durchzuschalten. Die Datenübertragung zwischen dem Teilnehmermodem und dem zugehörigen Vermittlungsmodem erfolgt bidirektional über verschiedene Übertragungsfrequenzbänder. Dabei werden die Daten von dem Teilnehmermodem zu dem zugehörigen Vermittlungsmodem über ein erstes Übertragungsfrequenzband und die Daten von dem Vermittlungsmodem zu dem zugehörigen Teilnehmermodem über ein zweites Übertragungsfrequenzband übertragen. Bei dem Teilnehmermodem und dem Vermittlungsmodem handelt es sich um sogenannte FDD-Modems (FDD: Frequency Division Duplex). Die Modems dienen dem Einsatz in öffentlichen und privaten Netzen.

Die Datenübertragung auf den Teilnehmeranschlußleitungen erfolgt mit unterschiedlichen Leitungscodierungsverfahren. Dabei wird zwischen sogenannten Vielträgerverfahren und Einträgerverfahren unterschieden. Bei den Einträgerverfahren wird zur Signalmodulation ein Trägersignal mit einer Trägerfrequenz eingesetzt. Die Einträgerverfahren oder auch SCM-Verfahren (SCM: Single Carrier Modulation)umfassen beispielsweise die QAM- oder CAP-Verfahren. Ein Beispiel für ein Vielträgerverfahren ist das DMT-Verfahren (DMT: Discrete Multi-Tone), wie es bei ADSL-Modems eingesetzt wird.

In der Druckschrift WO-A-99/33 215 (D1) wird ein System und ein Verfahren zum Bestimmen der Übertragungscharakteristik eines Kommunikationskanals und für die Übertragung von Daten über den Kommunikationskanal offenbart. Dabei wird der Übertragungskanal in mehrere Subfrequenzbänder gleicher Breite unterteilt und die maximale Übertragungsleistung jedes Subfrequenzbandes mittels der sogenannten water-filling technique oder der peak constrained water-filling technique ermittelt. Als optimale Übertragungskapazität wird die höchste Kanalkapazität des entsprechenden Subfrequenzbandes ermittelt. Über jedes dieser Subfrequenzbänder wird mit optimaler Übertragungskapazität gesendet, wobei D1 nur die Vielträgerbetriebs art verwendet. Es ist jedoch nicht vorgesehen, dass die Daten entweder mittels einer Einträgerbetriebsart oder mittels einer Vielträgerbetriebsart gesendet werden.

Über die Teilnehmeranschlußleitungen werden sowohl Sprachals auch Datensignale übertragen. Die Sprach- und Datensignale werden in unterschiedlichen Frequenzbereichen übertragen. Die Datenübertragung erfolgt über einen sogenannten Hin- und Rückkanal (Downstream, Upstream), die jeweils andere Übertragungsfrequenzbänder benutzen. Der bei VDSL(very high Bit rate digital subscriber line)-Systemen benutzt Frequenzbereich liegt dabei zwischen 138 kHz und 30 MHz. Bei der Frequenzbandzuordnung für die Datenübertragung wird im einfachsten Fall jeweils ein Übertragungsfrequenzband für den Hin- und Rückkanal eingesetzt, d.h. insgesamt zwei Übertragungsfrequenzbänder. Es ist auch möglich, für beide Übertragungsrichtungen mehr als ein Übertragungsfrequenzband einzusetzen. Einträgerverfahren benutzen je Übertragungsfrequenzband nur einen Signalträger, während Vielträgerverfahren je Übertragungsfrequenzband mehrere Träger einsetzen.

Die Teilnehmeranschlußleitungen der verschiedenen Teilnehmermodems werden bei der Vermittlungsstelle zu einem aus mehreren Datenübertragungsleitungen bestehenden Kabelbündel gebündelt. Die für die Datenübertragung eingesetzten Teilnehmeranschlußleitungen sind in der Regel herkömmliche Zweidraht-Telefonleitungen, die ungeschirmt sind. Es kann daher zwischen den Teilnehmeranschlußleitungen zu einem störenden Signalübersprechen kommen.

Beim Übersprechen wird zwischen sogenanntem Fernübersprechen und Nahübersprechen unterschieden. Beim Nahübersprechen (NEXT: Near End Cross Talk) erfolgt beispielsweise ein ungewünschtes Einkoppeln des von einem ersten Vermittlungsmodem gesendeten Signals auf die Anschlußleitung eines anderen Vermittelungsmodems. Beim Fernübersprechen (FEXT: Far End Cross Talk) wird das von einem Teilnehmermodem zu dem zugehörigen Vermittlungsmodem gesendete Signal im Bereich des Kabelbündels auf eine andere Teilnehmeranschlußleitung gekoppelt und stört so das Empfangssignal eines anderen Vermittlungsmodems.

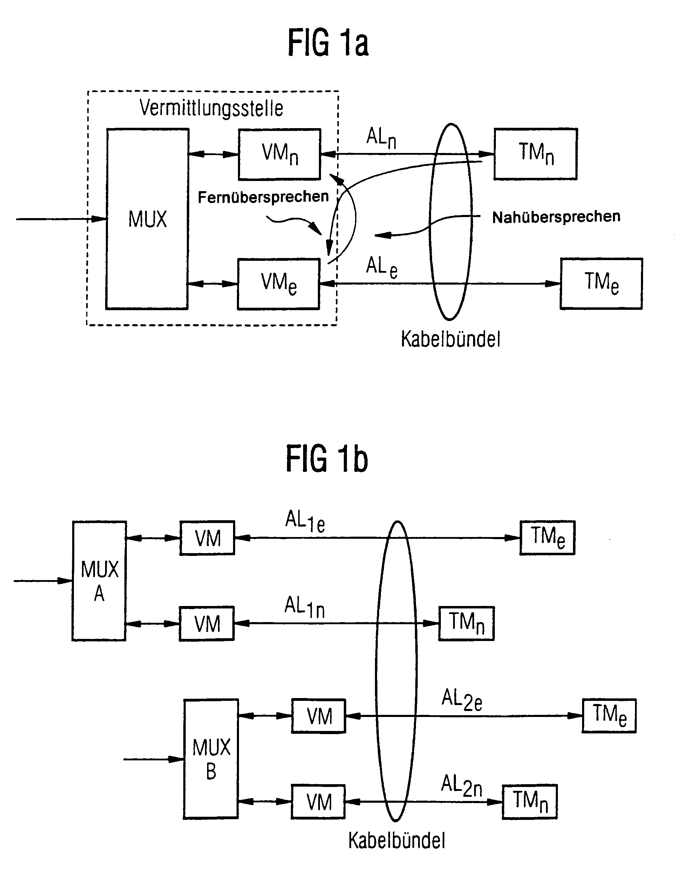

Fig. 1a zeigt ein herkömmliches Teilnehmeranschlußnetz mit einer Vermittlungsstelle, die mehrere Vermittlungsmodems VM enthält, an die jeweils Teilnehmermodems TM über Anschlußleitungen AL angeschlossen sind. Dabei sind in dem in Fig. 1 gezeigten Beispiel zwei Teilnehmermodems TM mit der Vermittlungsstelle verbunden. Das erste Teilnehmermodem $TM_n$ liegt im Nahbereich der Vermittlungsstelle, beispielsweise lediglich 300 m von der Vermittlungsstelle entfernt. Das andere Teilnehmermodem $TM_e$ liegt entfernt von der Vermittlungsstelle, beispielsweise in einer Entfernung von über 1000 m. Die Dämpfung des Datenübertragungssignals, das von einem Teilnehmermodem abgesendet wird, hängt sowohl von der Sendesignalfrequenz als auch von der Entfernung zwischen dem Vermittlungsmodem und dem Teilnehmermodem ab. Senden das entfernt gele-

gene Teilnehmermodem $TM_e$ und das nahe gelegene Teilnehmermodem $TM_n$ das Sendesignal mit der gleichen Leistung über den Rückkanal ab, kommt es im Bereich der Vermittlungsstelle zu einem Fernübersprechen von der Teilnehmeranschlußleitung $AL_n$ des nahe gelegenen Teilnehmermodems $TM_n$ auf die Teilnehmeranschlußleitung $AL_e$ des entfernt gelegenen Teilnehmermodems $TM_e$. In diesem Fall ist die Übertragung des entfernten TM stärker gestört als in jenem Fall, bei dem mehrere Modems von gleicher Entfernung aus senden. Derselbe Sachverhalt ergibt sich, wenn sich mehrere Vermittlungsstellen in unterschiedlicher Entfernung zu den Teilnehmermodems befinden (Fig. 1b). Im letztgenannten Fall ist in weiterer Folge auch das Hinkanalfrequenzband vom erfindungsgemäßen Verfahren betroffen.

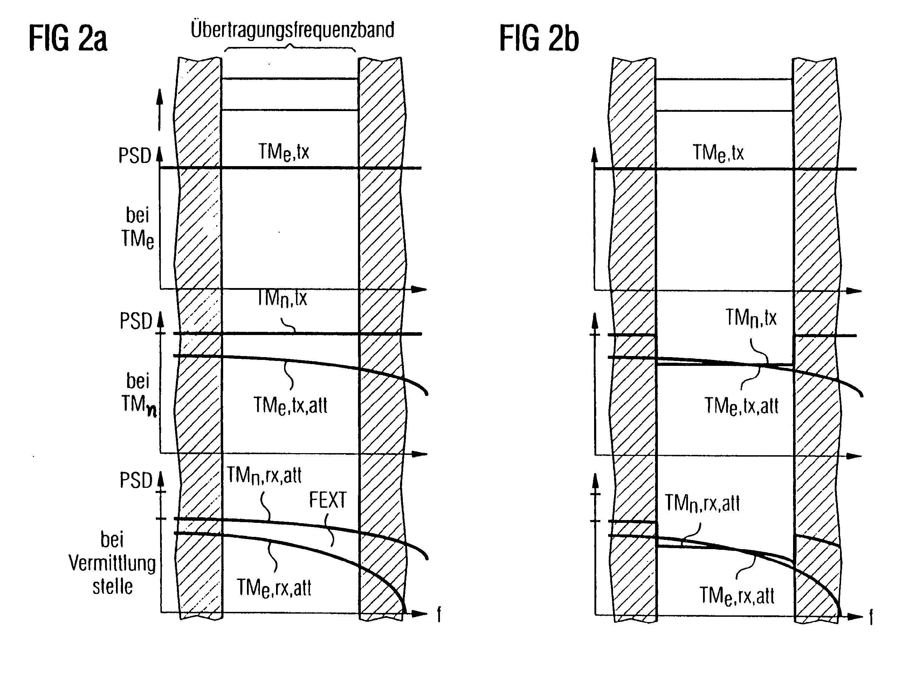

Fig. 2 zeigt den Verlauf der spektralen Leistungsdichte PSD bei dem in Fig. 1 dargestellten Teilnehmeranschlußnetz. Das Sendesignal des entfernt gelegenen Teilnehmermodems $TM_e$ weist am Ort des entfernt gelegenen Teilnehmermodems $TM_e$ ein konstantes Sendeleistungsspektrum auf. Im Bereich des nahe gelegenen Teilnehmermodems $TM_n$ ist das Übertragungsspektrum des entfernt gelegenen Modems $TM_e$ bereits gedämpft und liegt unter dem Sendeleistungsspektrum des nahe gelegenen Teilnehmermodems $TM_n$. Bei der Vermittlungsstelle sind beide Sendesignale aufgrund der Leitungsdämpfung abgedämpft, wobei allerdings das der durch die Vermittlungsstelle empfangene spektrale Leistungspegel des nahe gelegenen Teilnehmermodems $TM_n$ deutlich höher ist als der spektrale Leistungspegel des entfernt gelegenen Teilnehmermodems $TM_e$. Es kommt daher zu einem Fernübersprechen (FEXT).

Daher wird bei herkömmlichen Systemen eine Sendeleistungsreduktion bei dem nahe gelegenen Teilnehmermodem $TM_n$ durchgeführt, wie dies in Fig. 2b dargestellt ist. Diese Sendeleistungsreduktion wird auch als Power Back-off PBO bezeichnet. Hierzu wird die Sendeleistung des nahe gelegenen Teilnehmermodems $TM_n$ über das gesamte Übertragungsfrequenzband konstant abgesenkt. Hierdurch wird die Leistungsdifferenz zwischen den Empfangssignalen auf den verschiedenen Teilnehmeranschlußleitungen AL empfangenen Signalen im Bereich der Vermittlungsstelle vermindert und somit ein Fernübersprechen FEXT vermindert. Wie man in Fig. 2b erkennen kann, ist die Differenz des von dem nah gelegenen Teilnehmermodem $TM_n$ empfangenen gedämpften Datensignals und dem von dem entfernt gelegenen Teilnehmermodem $TM_e$ erhaltenen Empfangssignal im Bereich der Vermittlungsstelle geringer als bei dem in Fig. 2a gezeigten Fall ohne Sendeleistungsreduzierung.

Vor allem bei gemischtem Betrieb von Modems mit unterschiedlichen Verfahren zur Sendeleistungsreduzierung bestehen Unterschiede zwischen den verschiedenen Sendesignalleistungen, die zu einem unzulässigen Fernübersprechen führen.

Es ist daher die Aufgabe der vorliegenden Erfindung, ein Verfahren zur Übertragung von Sendedaten durch ein Teilnehmermodem eines Teilnehmeranschlußnetzes mit angepaßter Sendeleistung zu schaffen, bei dem das Fernübersprechen minimiert wird.

Insbesonders soll das Verfahren dazu geeignet sein, in einem Teilnehmeranschlussnetz Systeme mit unterschiedlichen Leitungscodierungsverfahren und unterschiedlichen Verfahren zur Sendeleistungsreduktion betreiben zu können.

Diese Aufgabe wird erfindungsgemäß durch ein Verfahren zur Übertragung von Sendedaten mit den im Patentanspruch 1 angegebenen Merkmalen gelöst.

Die Erfindung schafft ein Verfahren zur Übertragung von Sendedaten durch ein Teilnehmermodem eines Teilnehmeranschlußnetzes mit angepaßter Sendeleistung, wobei das Verfahren die folgenden Schritte aufweist:

(a) Selektieren von mindestens einem Übertragungsfrequenzband;

(b) Unterteilen des selektierten Übertragungsfrequenzbandes in mehrere Subfrequenzbänder;

(c) Ermitteln der zu jedem Subfrequenzband zugehörigen maximalen Sendeleistung und Auswählen einer bestimmten maximalen Sendeleistung aus den ermittelten maximalen Sendeleistungen;

(d) Senden der Sendedaten mit einer angepaßten Sendeleistung von dem Teilnehmermodem über eine zugehörige Teilnehmeranschlußleitung zu einem Vermittlungsmodem des Teilnehmeranschlußnetzes,

wobei in einer Einträgerbetriebsart die Sendedaten in allen Subfrequenzbändern mit einer einheitlichen Sendeleistung, die der geringsten Sendeleistung der ermittelten maximalen Sendeleistungen der Subfrequenzbänder entspricht, übertragen werden, wobei in einer Vielträgerbetriebsart die Sendedaten in den Subfrequenzbändern jeweils mit der ermittelten zugehörigen maximalen Sendeleistung übertragen werden.

Bei einer bevorzugten Ausführungsform des erfindungsgemäßen Verfahrens wird die maximale Sendeleistung der Subfrequenzbänder in Abhängigkeit von der Länge der Teilnehmeranschlußleitung zwischen dem Teilnehmermodem und dem Vermittlungsmodem ermittelt.

Bei einer bevorzugten Ausführungsform des erfindungsgemäßen Verfahrens umfaßt das Ermitteln der zu jedem Subfrequenzband zugehörigen maximalen Sendeleistung die folgenden Schritte: Erzeugen von Konfigurationsdaten des Teilnehmeranschlußnetzes, die die Länge der Teilnehmeranschlußleitung zwischen dem Teilnehmermodem und dem Vermittlungsmodem des Teilnehmeranschlußnetzes angeben, durch das Vermittlungsmodem in Abhängigkeit von Signal-Rauschabständen übertragener Daten bzw. der entsprechenden Empfangsleistung;

Übermitteln der erzeugten Konfigurationsdaten von dem Vermittlungsmodem an das Teilnehmermodem;

Ermitteln der zugehörigen maximalen Sendeleistung für jedes Subfrequenzband durch das Teilnehmermodem in Abhängigkeit von den übertragenen Konfigurationsdaten derart, daß das Fernübersprechen zwischen den Teilnehmeranschlußleitungen minimiert wird.

Bei einer bevorzugten Ausführungsform des erfindungsgemäßen Verfahrens wird das selektierte Übertragungsfrequenzband von weiteren Teilnehmermodems des Teilnehmeranschlußnetzes zur Datenübertragung über zugehörige Teilnehmeranschlußleitungen benutzt.

Bei einer bevorzugten Ausführungsform des erfindungsgemäßen Verfahrens ist das Teilnehmermodem ein FDD-Modem.

Bei einer bevorzugten Ausführungsform des erfindungsgemäßen Verfahrens ist das Teilnehmermodem ein VDSL-Modem.

Bei einer bevorzugten Ausführungsform des erfindungsgemäßen Verfahrens ist das Übertragungsfrequenzband zum Übertragen der Sendedaten ein Rückkanalfrequenzband eines xDSL-Datenübertragungssystems.

Bei einer bevorzugten Ausführungsform des erfindungsgemäßen Verfahrens ist das Übertragungsfrequenzband zum Übertragen der Sendedaten ein Hinkanalfrequenzband eines XDSL-Übertragungssystems.

Bei einer bevorzugten Ausführungsform des erfindungsgemäßen Verfahrens werden die Konfigurationsdaten des Teilnehmeranschlußnetzes über einen vorgegebenen Steuerkanal in einem Steuerkanalfrequenzband übertragen.

Bei einer bevorzugten Ausführungsform des erfindungsgemäßen Verfahrens wird die Betriebsart, in der das Teilnehmermodem sendet, eingestellt.

Im weiteren werden bevorzugte Ausführungsformen des erfindungsgemäßen Verfahrens zur Erläuterung erfindungswesentlicher Merkmale unter Bezugnahme auf die beigefügten Figuren beschrieben.

Es zeigen:

Fig. 1a, b ein Teilnehmeranschlußnetz nach dem Stand der Technik zur Erläuterung der erfindungsgemäßen Problematik;

Fig. 2 Sendeleistungsspektren für das in Fig. 1 dargestellte Teilnehmeranschlußnetz nach dem Stand der Technik;

Fig. 3 ein Teilnehmeranschlußnetz, bei dem das erfindungsgemäßen Verfahren eingesetzt wird;

Fig. 4 ein Ablaufdiagramm des erfindungsgemäßen Verfahrens zur Übertragung von Sendedaten durch ein Teilnehmermodem eines Teilnehmeranschlußnetzes mit angepaßter Sendeleistung gemäß der Erfindung;

Fig. 5 Sendeleistungsspektren der Teilnehmermodems bei Verwendung des erfindungsgemäßen Verfahrens.

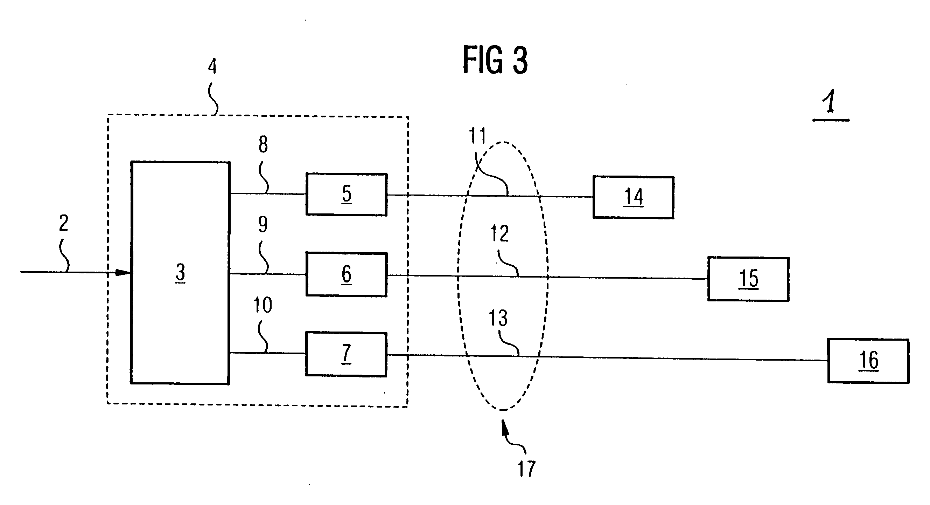

Fig. 3 zeigt ein Teilnehmeranschlußnetz 1 mit einer breitbandigen Übertragungsleitung 2, an die eine Schalteinrichtung 3, insbesondere ein Multiplexer, einer Vermittlungsstelle 4 angeschlossen ist. Die Vermittlungsstelle 4 enthält mehrere Vermittlungsmodems 5, 6, 7, die über Leitungen 8, 9, 10 mit Ausgängen der Schalteinrichtung 3 verbunden sind. Die Vermittlungsmodems sind über Teilnehmeranschlußleitungen 11, 12, 13 jeweils mit einem zugehörigen Teilnehmermodem 14, 15, 16 verbunden. An die verschiedenen Teilnehmermodems 14, 15, 16 sind Teilnehmer-Endgeräte, beispielsweise PC-Rechner, zum Senden und Empfangen von Daten anschließbar. Die Teilnehmermodems 14, 15, 16 sowie die Vermittlungsmodems 5, 6, 7 sind FDD-Modems. Bei dem in Fig. 3 gezeigten Beispiel ist das Teilnehmermodem 14 ein sehr nahe gelegenes Teilnehmermodem, dessen Teilnehmeranschlußleitung 11 beispielsweise eine Länge von lediglich 300 m besitzt. Das Teilnehmermodem 15 ist über eine Teilnehmeranschlußleitung 12 mit der Vermittlungsstelle 4 verbunden, wobei die Teilnehmeranschlußleitung 12 beispielsweise eine mittlere Leitungslänge von etwa 1000 m besitzt. Das Teilnehmermodem 16 ist beispielsweise über eine besonders lange Teilnehmeranschlußleitung 13 mit der Vermittlungsstelle 4 verbunden, wobei die Teilnehmeranschlußleitung 13 beispielsweise eine Länge von 1500 m besitzt.

Die verschiedenen Anschlußleitungen 11, 12, 13 sind im Bereich der Vermittlungsstelle 4 in einem Kabelbündel 17 gebündelt, das in Fig. 3 gestrichelt angedeutet ist. Um ein Fernübersprechen FEXT zwischen den Teilnehmeranschlußleitungen 11-13 im Bereich der Vermittlungsstelle 4 zu minimieren, werden die durch die Vermittlungsmodems 5, 6, 7 empfangenen Signalspektren durch das erfindungsgemäße Verfahren einander weitgehend angeglichen, so daß das Fernübersprechen minimiert wird. Dabei wird insbesondere die unterschiedliche Dämpfung aufgrund der unterschiedlichen Anschlußleitungslängen ausgeglichen.

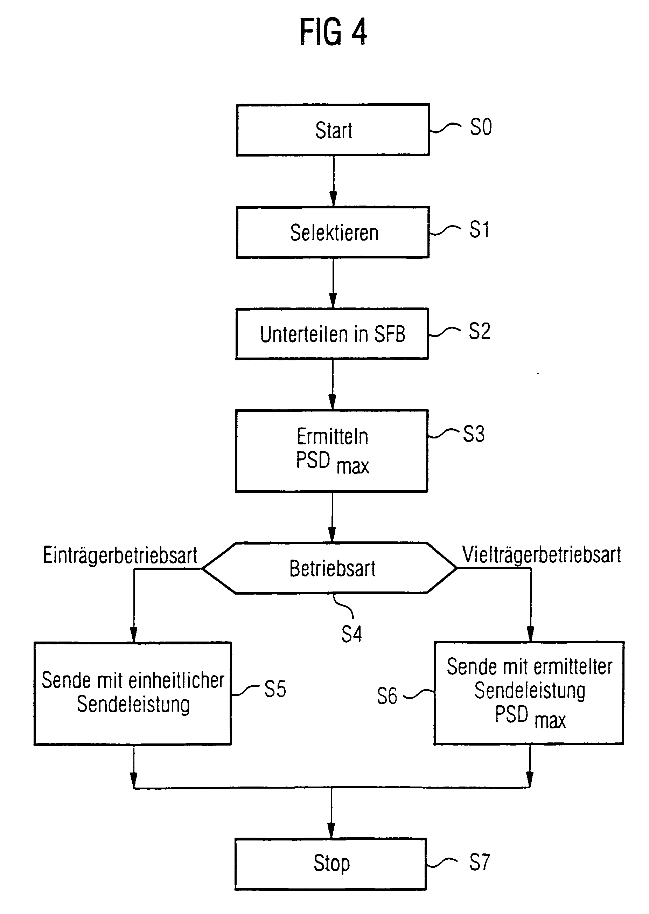

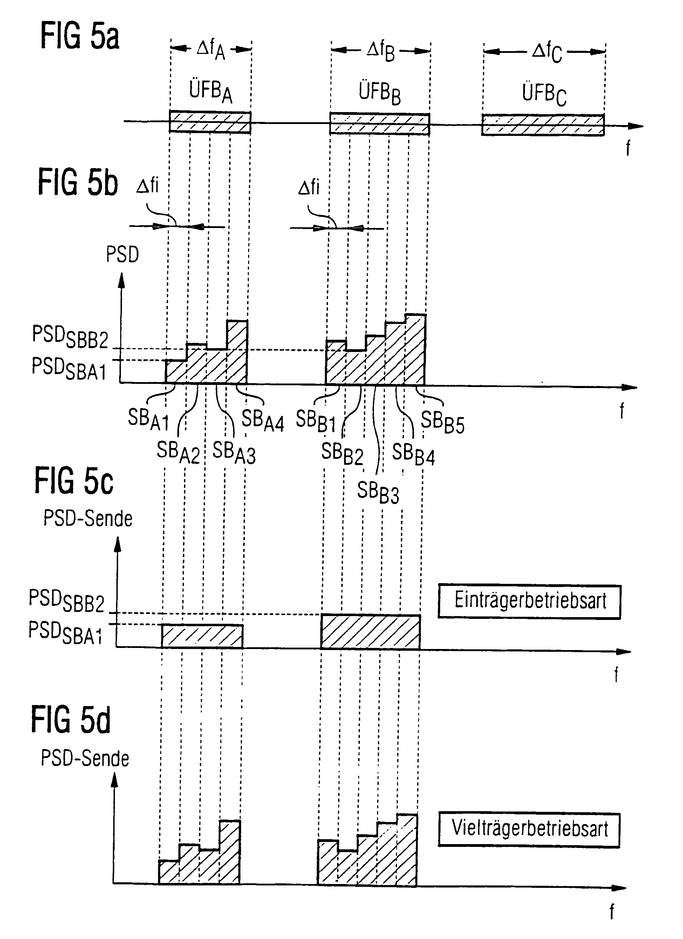

Fig. 4 zeigt ein Ablaufdiagramm des erfindungsgemäßen Verfahrens zur Übertragung von Sendedaten durch ein Teilnehmermodem 14, 15, 16 des Teilnehmeranschlußnetzes 1 mit einer angepaßten Sendeleistung zur Verringerung von Fernübersprechen. Nach dem Start des Verfahrens in Schritt S0 wird in einem Schritt S1 mindestens ein Übertragungs frequenzband ÜFB selektiert. Das selektierte bzw. ausgewählte Übertragungsfrequenzband ÜFB ist ein Übertragungsfrequenzband, das auch von den übrigen Teilnehmermodems des Teilnehmeranschlußnetzes 1 zur Datenübertragung verwendet wird. Beispielsweise werden, wie in Fig. 5 gezeigt, in Schritt S1 aus drei möglichen Übertragungsfrequenzbändern $ÜFB_a$, $ÜFB_b$, $ÜFB_c$ die beiden Übertragungsfrequenzbänder $ÜFB_a$, $ÜFB_b$ zur Datenübertragung durch das Teilnehmermodem ausgewählt.

In einem Schritt S2 werden die Übertragungsfrequenzbänder in Subfrequenzbänder unterteilt, die jeweils eine konstante Frequenzbandbreite $\Delta f_i$ besitzen.

Es gilt:

$$\Delta f_a = n \cdot \Delta f_i;$$

$$\Delta f_b = m \cdot \Delta f_i$$

wobei $\Delta f_i$ die Frequenzbandbreite eines Subfrequenzbandes SB ist und vorzugsweise durch den schaltungstechnischen Aufbau des Teilnehmermodems bestimmt ist.

Bei einer bevorzugten Ausführungsform des erfindungsgemäßen Verfahrens ist die Frequenzbandbreite $\Delta f_i$ eines Subfrequenzbandes SB einstellbar.

Die Anzahl n, m der Subfrequenzbänder SB wird entweder durch den schaltungstechnischen Aufbau des Teilnehmermodems festgelegt oder ist einstellbar.

In einem Schritt S3 wird die zu jedem Subfrequenzband SB zugehörige maximale Sendeleistung bzw. die maximale spektrale Leistungsdichte $PSDmax_i$ ermittelt. Das Vermittlungsmodem 5, 6, 7 ermittelt jeweils die Länge bzw. elektrische Länge der zugehörigen Teilnehmeranschlussleitung 11, 12, 13.

Dies geschieht über eine Messung der Empfangsleistung am Empfänger des Vermittlungsmodems. Dazu sendet das Teilnehmermodem mit einer vordefinierten Sendeleistung, die Teilnehmer- und Vermittlungsmodem bekannt ist. Das Sendesignal wird von der Teilnehmeranschlussleitung 11, 12, 13 frequenzabhängig gedämpft. Mit einer Messeinrichtung wird die Empfangsleistung des Übertragungsfrequenzbandes oder -subbandes bestimmt. Aus der Differenz der Sende- und Empfangsleistung errechnet sich die Einfügedämpfung, die die elektrische Länge des Teilnehmeranschlusses 11, 12, 13 widerspiegelt. Für die Bestimmung der physikalischen Länge ist die Kenntnis der elektrischen Eigenschaften des verwendeten Kabels oder eine einfache Längenangabe vorausgesetzt.

Bei einer bevorzugten Ausführungsform des erfindungsgemäßen Verfahrens wird aus der Differenz von erwarteter Empfangssignalleistung und tatsächlich empfangener und verrauschter Empfangssignalleistung der Signalrauschabstand gebildet,
wobei der Signalrauschabstand über das gesamte Übertragungsfrequenzband $ÜFB_i$ gebildet wird,

wobei der Signalrauschabstand in sequentieller Weise über alle oder manche Subfrequenzbänder $SB_i$ gebildet wird, wobei der Signalrauschabstand gleichzeitig über alle oder manche Subfrequenzbänder $SB_i$ gebildet wird.

Die Vermittlungsstelle 4 erzeugt aus den ermittelten Einfügedämpfungen oder den ermittelten Einfügedämpfungen in Kombination mit den Signalrauschabständen der Übertragungsfrequenzbänder oder -subfrequenzbänder Konfigurationsdaten des Teilnehmeranschlussnetzes 1 und überträgt die erzeugten Konfigurationsdaten von dem Vermittlungsmodem 5, 6, 7 über die zugehörige Teilnehmeranschlussleitung 11, 12, 13 an das jeweilige Teilnehmermodem 14, 15, 16. Aus den erhaltenen Konfigurationsdaten ermittelt das jeweilige Teilnehmermodem 14, 15, 16 die jeweils zulässige maximale Sendeleistung $PSDmax_i$ für jedes Subfrequenzband $SB_i$. Dabei wird die maximale Sendeleistung $PSDmax_i$ der jeweiligen Subbänder $SB_i$ derart berechnet, dass das Fernübersprechen FEXT zwischen den Teilnehmeranschlussleitungen 11, 12, 13 im Bereich des Kabelbündels 17 minimal ist.

Figur 5b zeigt ein Beispiel für ein durch ein Teilnehmermodem ermitteltes Signalleistungsspektrum, in dem die maximal zulässigen Sendeleistungen $PSDmax_i$ für die jeweiligen Subbänder $SB_i$ in den beiden Übertragungsfrequenzbändern $ÜFB_a$ $ÜFB_b$ angegeben sind.

In einem Schritt S4 wird entschieden , in welcher Betriebsart sich das Teilnehmermodem befindet. Die Betriebsart bzw. der Betriebsmodus des Teilnehmermodems ist vorzugsweise extern einstellbar, beispielsweise durch eine an dem jeweiligen Teilnehmermodem vorgesehene Schalteinrichtung.

Bei einer bevorzugten Ausführungsform des erfindungsgemäßen Verfahrens werden für jede Betriebsart bzw. jeden Betriebsmodus separat aufgebaute Modems eingesetzt.

Das Teilnehmermodem kann entweder in einer Einträgerbetriebsart oder in einer Vielträgerbetriebsart die Sendedaten an das zugehörige -Vermittlungsmodem senden. In der Einträgerbetriebsart werden die Sendedaten auf einem Träger moduliert, während in der Vielträgerbetriebsart Sendedaten auf mehrere Träger moduliert werden.

Erkennt das Teilnehmermodem im Schritt S4, daß die Einträgerbetriebsart eingestellt ist, werden in einem Schritt S5 die Sendedaten in allen Subfrequenzbändern SB mit einer bestimmten einheitlichen Sendeleistung der ermittelten maximalen Sendeleistungen $PSDmax_i$ übertragen. Dies ist schematisch in Fig. 5c dargestellt. Bei der einheitlichen Sendeleistung handelt es sich vorzugsweise um die geringste Sendeleistung der ermittelten maximalen Sendeleistungen $PSDmax_i$ der Subfrequenzbänder $SB_i$. Mit dieser Sendeleistung wird in jedem Fall sichergestellt, daß minimal Fernübersprechen im Bereich des Kabelbündels 17 auftritt. Die im Schritt S5 gesendete einheitliche Sendeleistung kann bei einer alternativen Ausführungsform auch über der geringsten Sendeleistung der ermittelten maximalen Sendeleistungen liegen, wobei bewusst etwas Fernübersprechen in Kauf genommen wird.

Wie man in Fig. 5 erkennen kann, ist die geringste Sendeleistung der ermittelten maximalen Sendeleistungen $PSDmax_i$ bei dem in Fig. 5 gezeigten Beispiel die maximal zulässige Sendeleistung $PSD_{SBA1}$ im Subfrequenzband $SBA_1$ in dem Übertragungsfrequenzband $ÜFB_A$. Die geringste Sendeleistung der ermittelten maximalen Sendeleistung der Subfrequenzbänder $SB_B$ innerhalb des Übertragungsfrequenzbandes $ÜFB_B$ ist bei dem in Fig. 5b gezeigten Beispiel die maximal zulässige Sendeleistung $PSD_{SBB2}$ in dem Subfrequenzband $SBB_2$.

Die Sendedaten werden bei eingestellter Einträgerbetriebsart im Übertragurgsfrequenzband $ÜFB_A$ mit der maximal zulässigen Sendeleistung des Subfrequenzbandes $SB_{A1}$ gesendet, und in dem Übertragungsfrequenzband $ÜFB_B$ mit der maximal zulässigen Sendeleistung des Subfrequenzbandes $SB_{B2}$. Hierdurch wird ein Fernübersprechen FEXT im Bereich der Vermittlungsstelle 4 in jedem Fall unterdrückt. Die Minimierung des Fernübersprechens FEXT führt zu geringeren Störleistungen und somit zu höheren Signalrauschabständen und die Datenübertragungskanalkapazität erhöht. Hierdurch wird die Datenübertragungsrate bzw. die mögliche zulässige Entfernung zwischen dem Teilnehmermodem und dem Vermittlungsmodem erheblich gesteigert.

Erkennt das Teilnehmermodem im Schritt S4, daß die Vielträgerbetriebsart eingestellt ist, werden im Schritt S6 die Sendedaten in den Subfrequenzbändern SB jeweils mit der ermittelten zugehörigen maximalen Sendeleistung $PSDmax_i$ übertragen. Dies ist in Fig. 5d dargestellt. Wie man aus dem Vergleich in Fig. 5b und 5d erkennen kann, entspricht die Sendeleistung PSDsende in der Vielträgerbetriebsart dem in Fig. 5b dargestellten Spektrum. Bei der Vielträgerbetriebsart werden für jedes selektierte Übertragungsfrequenzband ÜFB mehrere Signalträger zur Signalmodulation eingesetzt. Jedes Subfrequenzband SB weist einen eigenen Signalmodulationsträger auf. Das Vielträger-Modulationsverfahren ist beispielsweise ein DMT-Verfahren mit einer Vielzahl von Signalträgerfrequenzen.

Nach dem Senden der Sendedaten wird das Verfahren im Schritt S7 beendet.

Bei dem erfindungsgemäßen Verfahren wird durch die Unterteilung in Subbänder SB eine genauere Anpassung der Sendesignalleistungen der Teilnehmermodems 14, 15, 16 zur Reduktion von Fernübersprechen FEXT erreicht. Bei dem erfindungsgemäßen Verfahren ist ferner sowohl ein Einträgerbetrieb mit einem Einträger-Modulationsverfahren und ein Vielträgerbetrieb mit einem Vielträger-Modulationsverfahren möglich. Die spektrale Kompatibilität zwischen Übertragungssystemen unterschiedlicher Bauart in einem gemeinsamen Kabelbündel wird durch das erfindungsgemäße Verfahren gewährleistet. Das erfindungsgemäße Verfahren eignet sich insbesondere für den Einsatz bei xDSL-Modems, insbesondere VDSL-Modems.

Bezugszeichenliste

| | |
|---|---|
| 1 | Teilnehmeranschlußnetz |
| 2 | Datenübertragungsleitung |
| 3 | Schalteinrichtung |
| 4 | Vermittlungsstelle |
| 5, 6, 7 | Vermittlungsmodems |
| 8, 9, 10 | Leitungen |
| 11, 12, 13 | Teilnehmeranschlußleitungen |
| 14, 15, 16 | Teilnehmermodems |
| 17 | Kabelbündel |

**Patentansprüche**

**1.** Verfahren zur Übertragung von Sendedaten durch ein Teilnehmermodem (14, 15, 16) eines Teilnehmeranschlußnetzes (1) mit angepaßter Sendeleistung, wobei das Verfahren die folgenden Schritte aufweist :

(a) Selektieren (S1) von mindestens einem Übertragungsfrequenzband (ÜFB);
(b) Unterteilen (S2) des selektierten Übertragungsfrequenzbandes (ÜFB) in mehrere Subfrequenzbänder (SB);
(c) Ermitteln (S3) der zu jedem Subfrequenzband (SB) zugehörigen maximalen Sendeleistung;
(d) Senden (S5, S6) der Sendedaten mit einer angepaßten Sendeleistung von dem Teilnehmermodem (14, 15, 16) über eine zugehörige Teilnehmeranschlußleiturzg (11, 12, 13) zu einem Vermittlungsmodem (5, 6, 7) des Teilnehmeranschlußnetzes (1),

wobei in einer Einträgerbetriebsart die Sendedaten in allen Subfrequenzbändern mit einer einheitlichen Sendeleistung, die der geringsten Sendeleistung der ermittelten maximalen Sendeleistungen der Subfrequenzbänder (SB) entspricht, übertragen werden (S5),
wobei in einer Vielträgerbetriebsart die Sendedaten in den Subfrequenzbändern jeweils mit der ermittelten zugehörigen maximalen Sendeleistung übertragen werden (S6).

**2.** Verfahren nach Anspruch 1, bei dem die maximale Sendeleistung der Subfrequenzbänder SB in Abhängigkeit von der Länge oder elektrischen Länge der Teilnehmeranschlußleitung (11, 12, 13) zwischen dem Teilnehmermodem (14, 15, 16) und dem Vermittlungsmodem (5, 6, 7) ermittelt wird.

**3.** Verfahren nach Anspruch 1 oder 2, bei dem das Ermitteln der zu jedem Subfrequenzband (SB) zugehörigen maximalen Sendeleistung die folgenden Schritte umfaßt:

> Erzeugen von Konfigurationsdaten des Teilnehmeranschlußnetzes (1), die die Länge der Teilnehmeranschlußleitungen (11, 12, 13) zwischen den Teilnehmermodems (14, 15, 16) und den zugehörigen Vermittlungsmodems (5, 6, 7) des Teilnehmeranschlußnetzes (1) angeben, durch die zugehörigen Vermittlungsmodems (5, 6, 7) in Abhängigkeit von Signalrauschabständen bzw. Empfangsleistung;
> Übertragen der erzeugten Konfigurationsdaten von einem Vermittlungsmodem (5, 6, 7) an das zugehörige Teilnehmermodem (14, 15, 16);
> Ermitteln der zugehörigen maximalen Sendeleistung für jedes Subfrequenzband (SB) durch das Teilnehmermodem (14, 15, 16) aus den übertragenen Konfigurationsdaten derart, daß das Fernübersprechen (FEXT) zwischen den Teilnehmeranschlußleitungen (11, 12, 13) minimiert wird.

**4.** Verfahren nach einem der vorangehenden Ansprüche, bei dem das selektierte Übertragungsfrequenzband (ÜFB) von weiteren Teilnehmermodems des Teilnehmeranschlußnetzes (1) zur Datenübertragung über zugehörige Teilnehmeranschlußleitungen benutzt wird.

**5.** Verfahren nach einem der vorangehenden Ansprüche, bei dem das Teilnehmermodem (14, 15, 16) jeweils ein FDD-Modem ist.

**6.** Verfahren nach einem der vorangehenden Ansprüche, bei dem das Teilnehmermodem (14, 15, 16) jeweils ein VDSL-Modem ist.

**7.** Verfahren nach einem der vorangehenden Ansprüche, bei dem das Übertragungsfrequenzband (ÜFB) ein Rückkanalfrequenzband eines xDSL-Datenübertragungssystems ist.

**8.** Verfahren nach einem der vorangehenden Ansprüche, bei dem das Übertragungsfrequenzband (ÜFB) ein Hinkanalfrequenzband eines XDSL-Datenübertragungssystem ist.

**9.** Verfahren nach einem der vorangehenden Ansprüche, bei dem die Konfigurationsdaten des Teilnehmeranschlußnetzes (1) über einen vorgegebenen Steuerkanal in einem bestimmten Steuerkanalfrequenzband übertragen werden.

**10.** Verfahren nach einem der vorangehenden Ansprüche, bei dem die Betriebsart, in der das Teilnehmermodem (14, 15, 16) sendet, eingestellt wird.

**Claims**

**1.** Method for transmitting transmit data using a subscriber modem (14, 15, 16) of a subscriber access network (1) with adapted transmit power, the method exhibiting the following steps:

> (a) selecting (S1) at least one transmission frequency band (ÜFB) ;
> (b) subdividing (S2) the selected transmission frequency band (ÜFB) into a number of subfrequency bands (SB);
> (c) determining (S3) the maximum transmit power associated with each subfrequency band (SB);
> (d) transmitting (S5, S6) the transmit data with an adapted transmit power from the subscriber modem (14, 15, 16) via an associated subscriber line (11, 12, 13) to a switch modem (5, 6, 7) of the subscriber access network (1),

wherein, in a single-carrier operating mode, the transmit data are transmitted with a uniform transmit power, corresponding to the lowest transmit power from the ascertained maximum transmit powers of the subfrequency bands (SB), in all subfrequency bands (S5),
wherein, in a multi-carrier operating mode, the transmit data are in each case transmitted in the subfrequency bands with the associated maximum transmit power determined (S6).

**2.** Method according to Claim 1, in which the maximum transmit power of the subfrequency bands SB is determined in dependence on the length or electrical length of the subscriber line (11, 12, 13) between the subscriber modem (14, 15, 16) and the switch modem (5, 6, 7).

**3.** Method according to Claim 1 or 2, in which the determining of the maximum transmit power associated with each subfrequency band (SB) comprises the following steps:

> generating configuration data of the subscriber access network (1) which specify the length of the subscriber lines (11, 12, 13) between the subscriber modems (14, 15, 16) and the associated switch modems (5, 6, 7) of the subscriber access network (1) by the associated switch modems (5, 6, 7) in dependence on signal/noise ratios or, respectively, receive power;
> transmitting the generated configuration data from a switch modem (5, 6, 7) to the associated subscriber modem (14, 15, 16);
> determining the associated maximum transmit power for each subfrequency band (SB) by the subscriber modem (14, 15, 16) from the transmitted configuration data, in such a manner that the far end cross talk (FEXT) between the subscriber lines (11, 12, 13) is minimized.

4. Method according to one of the preceding claims, in which the selected transmission frequency band (ÜFB) is used for data transmission via associated subscriber lines by other subscriber modems of the subscriber access network (1).

5. Method according to one of the preceding claims, in which the subscriber modem (14. 15, 16) is in each case an FDD modem.

6. Method according to one of the preceding claims, in which the subscriber modem (14, 15, 16) is in each case a VDSL modem.

7. Method according to one of the preceding claims, in which the transmission frequency band (ÜFB) is an upstream channel frequency band of an xDSL data transmission system.

8. Method according to one of the preceding claims, in which the transmission frequency band (ÜFB) is a downstream channel frequency band of an XDSL data transmission system.

9. Method according to one of the preceding claims, in which the configuration data of the subscriber access network (1) are transmitted in a particular control channel frequency band via a predetermined control channel.

10. Method according to one of the preceding claims, in which the operating mode in which the subscriber modem (14, 15, 16) transmits is adjusted.

**Revendications**

1. Procédé de transmission de données émises par un modem de participants (14, 15, 16) d'un réseau de branchement de participants (1) avec une puissance d'émission adaptée, le procédé présentant les étapes suivantes :

    (a) Sélection (S1) d'au moins une bande de fréquences de transmission (ÜFB) ;
    (b) Division (S2) de la bande de fréquences de transmission (ÜFB) sélectionnée en plusieurs bandes de fréquences secondaires (SB) ;
    (c) Détermination (S3) de la puissance d'émission maximale associée à chaque bande de fréquences secondaire (SB) ;
    (d) Émission (S5, S6) des données émises avec une puissance d'émission adaptée depuis le modem de participants (14, 15, 16) sur une ligne de branchement de participants (11, 12, 13) associée vers un modem de central (5, 6, 7) du réseau de branchement de participants (1),

les données émises, dans un mode de fonctionnement à porteuse unique, étant transmises (S5) dans toutes les bandes de fréquences secondaires avec une puissance d'émission homogène qui correspond à la puissance d'émission la plus petite des puissances d'émission maximales déterminées des bandes de fréquences secondaires (SB),
les données émises, dans un mode de fonctionnement à porteuses multiples, étant transmises (S6) dans les bandes de fréquences secondaires à chaque fois avec la puissance d'émission maximale associée déterminée.

2. Procédé selon la revendication 1, avec lequel la puissance d'émission maximale des bandes de fréquences secondaires SB est déterminée en fonction de la longueur ou de la longueur électrique de la ligne de branchement de participants (11, 12, 13) entre le modem de participants (14, 15, 16) et le modem de central (5, 6, 7).

3. Procédé selon la revendication 1 ou 2, avec lequel la détermination de la puissance d'émission maximale associée à chaque bande de fréquences secondaire (SB) comprend les étapes suivantes :

    Génération, par le modem de central (5, 6, 7) correspondant, de données de configuration du réseau de branchement de participants (1), lesquelles indiquent la longueur de la ligne de branchement de participants (11, 12, 13) entre le modem de participants (14, 15, 16) et le modem de central (5, 6, 7) correspondant du réseau de branchement de participants (1), en fonction des rapports signal/bruit ou de la puissance reçue ;
    Transmission des données de configuration générées d'un modem de central (5, 6, 7) au modem de participants (14, 15, 16) associé;
    Détermination, par le modem de participants (14, 15, 16), de la puissance d'émission maximale correspondante pour chaque bande de fréquences secondaire (SB) en fonction des données de configuration transmises de manière à réduire au minimum la télédiaphonie (FEXT) entre les lignes de branchement de participants (11, 12, 13).

4. Procédé selon l'une des revendications précédentes, avec lequel la bande de fréquences de transmission (ÜFB) sélectionnée est utilisée par d'autres modems de participants du réseau de branchement de participants (1) pour la transmission de données sur les lignes de branchement de participants correspondantes.

**5.** Procédé selon l'une des revendications précédentes, avec lequel le modem de participants (14, 15, 16) est à chaque fois un modem FDD.

**6.** Procédé selon l'une des revendications précédentes, avec lequel le modem de participants (14, 15, 16) est à chaque fois un modem VDSL.

**7.** Procédé selon l'une des revendications précédentes, avec lequel la bande de fréquences de transmission (ÜFB) est une bande de fréquences de canal de retour d'un système de transmission de données xDSL.

**8.** Procédé selon l'une des revendications précédentes, avec lequel la bande de fréquences de transmission (ÜFB) est une bande de fréquences de canal aller d'un système de transmission de données xDSL.

**9.** Procédé selon l'une des revendications précédentes, avec lequel les données de configuration du réseau de branchement de participants (1) sont transmises sur un canal de commande prédéfini dans une bande de fréquences de canal de commande donnée.

**10.** Procédé selon l'une des revendications précédentes, avec lequel le mode de fonctionnement dans lequel émet le modem de participants (14, 15, 16) est établi.

## FIG 1a

Vermittlungsstelle

MUX

VM$_n$

VM$_e$

Fernübersprechen

Nahübersprechen

AL$_n$

AL$_e$

TM$_n$

TM$_e$

Kabelbündel

## FIG 1b

MUX A

VM

VM

AL$_{1e}$

AL$_{1n}$

TM$_e$

TM$_n$

MUX B

VM

VM

AL$_{2e}$

AL$_{2n}$

TM$_e$

TM$_n$

Kabelbündel

## FIG 2a

Übertragungsfrequenzband

PSD — bei $TM_e$

$TM_e,tx$

PSD — bei $TM_n$

$TM_n,tx$

$TM_e,tx,att$

PSD — bei Vermittlung stelle

$TM_n,rx,att$

FEXT

$TM_e,rx,att$

f

## FIG 2b

$TM_e,tx$

$TM_n,tx$

$TM_e,tx,att$

$TM_n,rx,att$

$TM_e,rx,att$

f

EP 1 250 784 B1

EP 1 250 784 B1

FIG 3

# FIG 4

Start — S0

Selektieren — S1

Unterteilen in SFB — S2

Ermitteln PSD $_{max}$ — S3

Einträgerbetriebsart — Betriebsart — Vielträgerbetriebsart
S4

Sende mit einheitlicher Sendeleistung — S5

S6 — Sende mit ermittelter Sendeleistung PSD $_{max}$

Stop — S7

FIG 5a

FIG 5b

FIG 5c

FIG 5d

**EP 1 250 784 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9933215 A